# EUROPEAN PATENT SPECIFICATION

(11) **EP 0 347 893 B1**
(45) Date of publication and mention of the grant of the patent: **02.09.1998**
(21) Application number: 89111328.4
(22) Date of filing: 21.06.1989
(51) Int. Cl.: G06K 7/08

(54) **Programmable transponder system**
Programmierbares Transpondersystem
Système avec répondeur programmable

(30) Priority: 22.06.1988 US 209865
(43) Date of publication of application: 27.12.1989
(73) Proprietor: IDESCO OY, SF-90570 Oulu (FI)
(72) Inventor: Katzenstein, Henry S., Pacific Palisades California 90272 (US)
(74) Representative: Grünecker, Kinkeldey, Stockmair & Schwanhäusser Anwaltssozietät

(56) References cited:
- EP-A- 0 082 690
- EP-A- 0 142 013
- EP-A- 0 245 605
- GB-A- 2 177 528
- US-A- 4 650 981

## Description

This invention relates to a reader, transpondes and system according to the preamble parts of claims 1, 10 and 14 respectively. In such a system the transponder is displaced from the reader identifying the transponder to the reader in accordance with a code individual to the transponder and transmitted to the reader at the command of the reader. The system is able to provide such identification without interference from extraneous noise, even at high levels, or small obstacles in the path of data transmission between the transponder and the reader. More particularly, the invention relates to a system for initially transmitting an identifying code from the reader to the transponder and programming this code into the transponder to identify the transponder.

As our society becomes increasingly complex, it becomes increasingly important to be able to identify different objects. For example, in an aircraft plant for manufacturing a jet airplane, thousands, and even tens of thousands, of different tools are required to manufacture the different parts incorporated into the airplane. It is accordingly important to be able to identify the individual tools quickly and reliably. One reason is that a fast and reliable identification of each individual tool is cost-efficient because it minimizes the time needed to identify such tool. Another reason is that a fast and reliable identification of each individual tool minimizes the possibility that the wrong tool will be selected and used on a workpiece, thereby causing the workpiece to be ruined or damaged.

It has been known for an extended period of time that it would be desirable to provide a system for obtaining a fast and reliable indication of objects such as tools. An extensive effort has accordingly been made by a wide variety of different parties to provide a satisfactory system. Such efforts have not been productive for a number of reasons. As a result, a satisfactory system still does not exist for identifying objects such as tools.

The systems now in use are undesirable for a number of reasons. They are not fast. For example, some of the systems use a transponder which stores energy received from a displaced reader and which then generates a code after such storage of energy. The energy is stored by charging a capacitance at the transponder. Other systems sweep a range of frequencies and detect the perturbations produced at individual frequencies in such frequency range. As will be appreciated, both types of systems are relatively slow.

The systems now in use have other severe limitations. The systems are not self synchronous. In other words, the systems do not operate on the basis of clock signals internally generated in the system. As a result, the systems sometimes provide the reader with false and inaccurate indications of the code identifying the object at the transponder. This causes an improper object to be identified sometimes at the reader.

The systems now in use also have other critical limitations. For example, the systems now in use are sometimes responsive to extraneous signals. Furthermore, in the systems now in use, members in the path between the transponder and the reader sometimes block the reception by the reader of the identifying signals transmitted by the transponder. This blockage has occurred even when the members in the path are relatively small. These problems have been exacerbated by the fact that the systems now in use are not self-synchronous. This has caused the systems now in use to identify objects improperly.

The systems now in use are also relatively complicated. This has caused the systems now in use to be excessively large from the standpoint of the space occupied by such systems. It has also prevented the systems now in use from taking advantage of integrated circuit technology. For example, it would be desirable to dispose the transponder on a single integrated circuit chip and to dispose all, or at least substantially all, of the reader components on another integrated circuit chip.

From EP-A-082 690 a transmitter/responder system is known. A transmitter means can be embodied in any suitable manner, at least one responder and at least one transmitter means can be movable relative to each other. At least one transmitter means can be a programmer for initially programming at least one memory means provided in the responder. At least a portion of code from the transmitted coded signals can be utilized for providing the memory means with storable code or for modifying at least a portion of code when already stored in the memory means.

European Patent application EP-A-245 605 discloses and claims a system which overcomes the above disadvantages. The system is fast, accurate and reliable. It operates on a self-synchronous and passive basis. It is immune to extraneous signals and it is effective even when small members are disposed between the transponder and the reader. It is simple and compact such that the transponder is disposed on a single integrated circuit chip and all, or substantially all, of the reader circuit is disposed on another single integrated circuit chip. It is quite tolerant of variations in the values of components so that it can be produced economically in quantity.

In one embodiment of the system disclosed and claimed in EP-A- 245 605 a reader (which can also be considered to be an interrogator) identifies information, such as the identity of an object at a transponder, provided in binary form at the transponder. The reader initially generates a pulse which activates the transponder into transmitting a series of signals, such as by magnetic induction, to the reader. Upon each count of a particular number of signals in the reader, the reader generates a new pulse which causes the transponder to produce a new series of signals. The generation of the pulses by the reader may occur through the charge and discharge of energy in a storage member such as a capacitance.

The series of signals produced by the transponder in EP-A- 245 605 may have either a first frequency or second frequency. The signals may be generated at the first and second frequencies in each sequence in an order dependent upon (a) the binary code provided at the transponder and (b) the polarity of the pulse produced by the reader in such sequence. The signals may be generated at the second frequency by connecting a capacitance across a coupling coil at the transponder. The reader then identifies the information by demodulating the signals received by it at the first and second frequencies.

The reader in EP-A- 245 605 is able to interrupt at any time the generation of the sequences of signals at the transponder when it does not receive the signals transmitted by the transponder. The reader then operates on a free running basis to generate pulses of opposite polarity at a relatively low frequency. In this way, the reader is constantly prepared to activate the transponder when the transponder becomes subsequently disposed within the effective range of the reader.

The memory storing the code in the transponder may be programmable. This invention provides a system operable at the reader for programming a binary code into such memory from the reader to constitute the binary information thereafter identifying the object. The code is transmitted from the reader to the object by sequences of pulses similar to the pulses described above as being transmitted from the reader to the transponder to interrogate the transponder as to the code in the transponder.

To program the memory with such a code, the reader in this invention generates, and transmits to the transponder, sequences of pulses, each sequence coding for a programmable item of information (e.g. binary "1", binary "0" and reset). Depending upon the individual programmable item, the coded sequence may have pulses of the same polarity or pulses of opposite polarity. At a time related to each such sequence, the reader produces a sequence different from the coded sequence and indicating that pulses coding for a programmable item follow.

The transponder in this invention demodulates and decodes the transmitted pulses to recover the identifying code. This code is then recorded in the programmable memory and is used thereafter to identify the transponder when the reader interrogates the transponder as described above.
1 is a circuit diagram, partially in block form, of one embodiment of a system at the reader for transmitting pulses to the transponder to program the programmable memory in the transponder;
Figure 2 illustrates sequences of signals for programming individual items (e.g. binary "1", binary "0" and rese) in the programmable memory in the transponder);
Figure 3 illustrates the voltages produced at strategic terminals in the system of Figure 1 when the system is operating to program a particular sequence of programmable items into the memory at the transponder;
Figure 4 is a schematic circuit diagram illustrating how an identifying code for a transponder is produced at the reader;
Figure 5 is a circuit diagram, partially in block form, schematically illustrating a system at the transponder for demodulating and then decoding the programmable pulses received at the transponder and for recording the decoded information in the memory in the transponder; and
Figure 6 is a table illustrating the operation of the transponder of Figure 5 in responding to the programmable pulses to record the decoded information in the memory in the transponder.

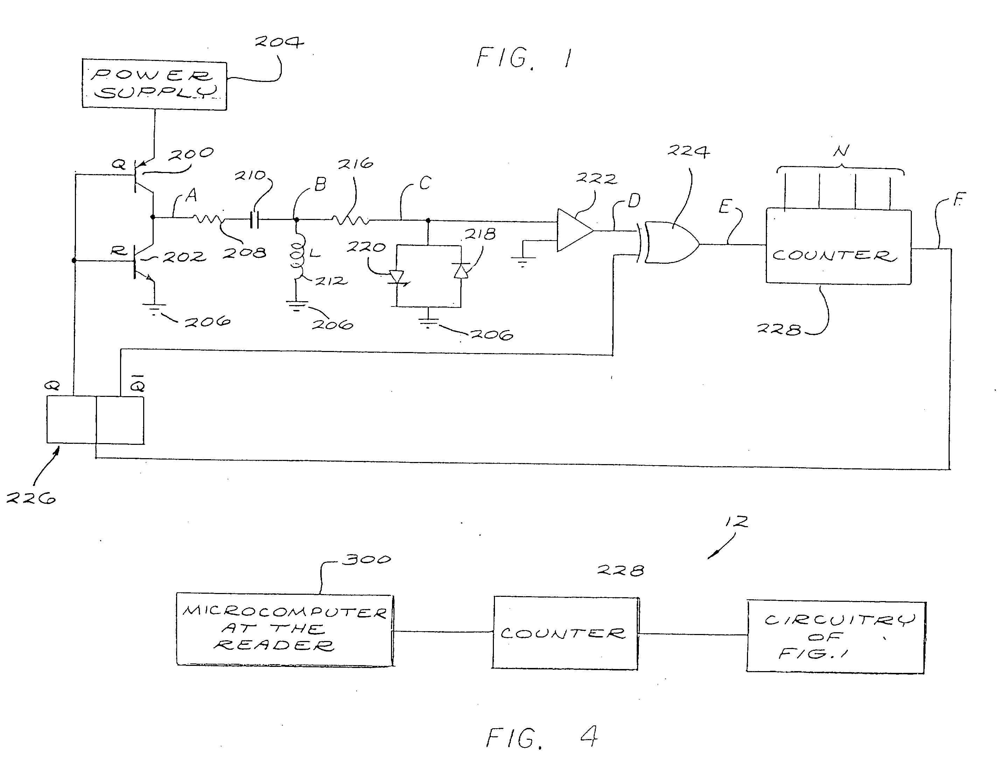

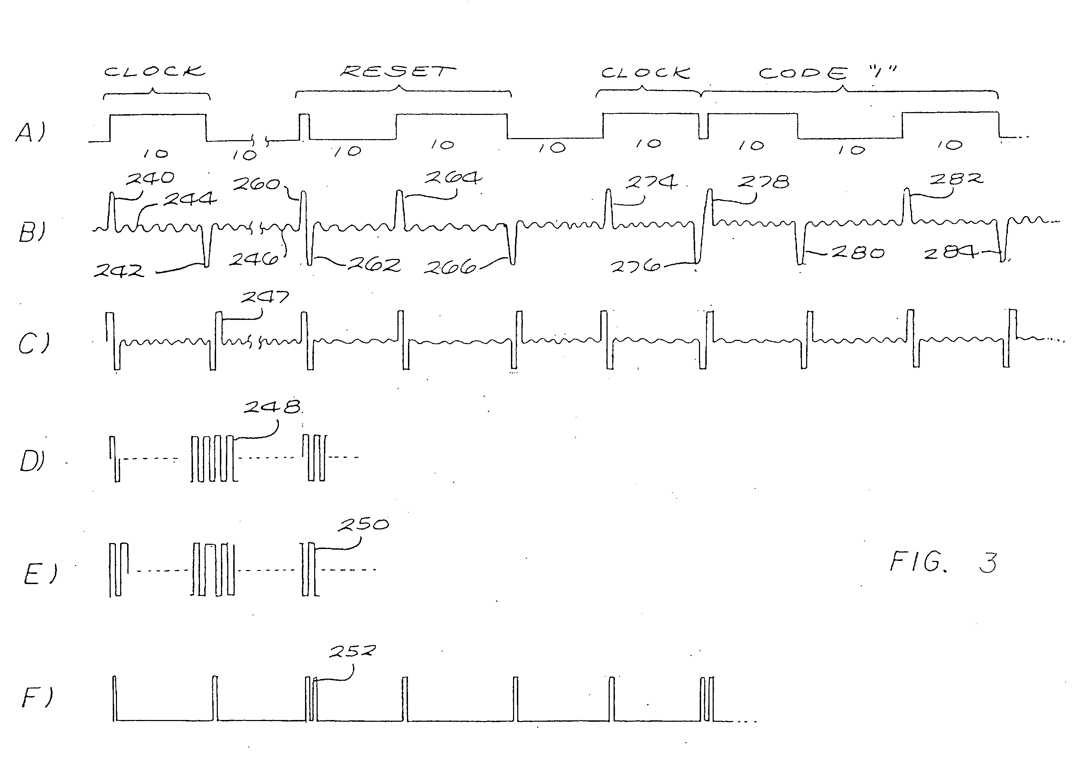

A system at the reader for programming the programmable information in the transponder memory 104 is shown in Figure 1. The system shown in Figure 1 may include a pair of transistors 200 and 202. The transistor 200 may be a pnp transistor and the transistor 202 may be an npn transistor. The emitter of the transistor 200 may receive a positive voltage from a power supply 204 and the emitter of the transistor 202 may receive a reference voltage such as a ground 206.

The collectors of the transistors 200 and 202 may be connected to a resistor 208 which is in series with a capacitance 210. A coil 212 is connected between the capacitance 210 and the reference potential such as ground. A connection is made from the ungrounded terminal of the coil 212 to one terminal of a resistance 216. The other terminal of the resistence 216 is common with the anode of a diode 218 and the cathode of a diode 220. The cathode of the diode 218 and the anode of the diode 220 are common with the reference potential such as the ground 206.

The voltage on the anode of the diode 218 and the cathode of the diode 220 is introduced to one input terminal of a comparator 222. A second input terminal of the comparator 222 receives the reference potential such as the ground 206. The output from the comparator 222 is introduced to one input terminal of an exclusive "or" network 224. A second input terminal of the exclusive "or" network 224 receives the voltage on the output terminal of one stage (designated as the "false" stage) in a bistable member such as a flip-flop generally indicated at 226.

The signals from the exclusive "or" network 224 are introduced to a counter 228. The counter 228 may be programmed at each instant to count to a particular value dependent upon the programmable item to be inserted into the programmable memory in the transponder. Upon each count of the particular count in the counter 228, a signal is introduced to the input terminals in the flip-flop 226 to trigger the flip-flop from one state of operation to the other. The output terminals of the true and false stages in the flip-flop 226 are respectively connected to the bases of the transistors 220 and 202.

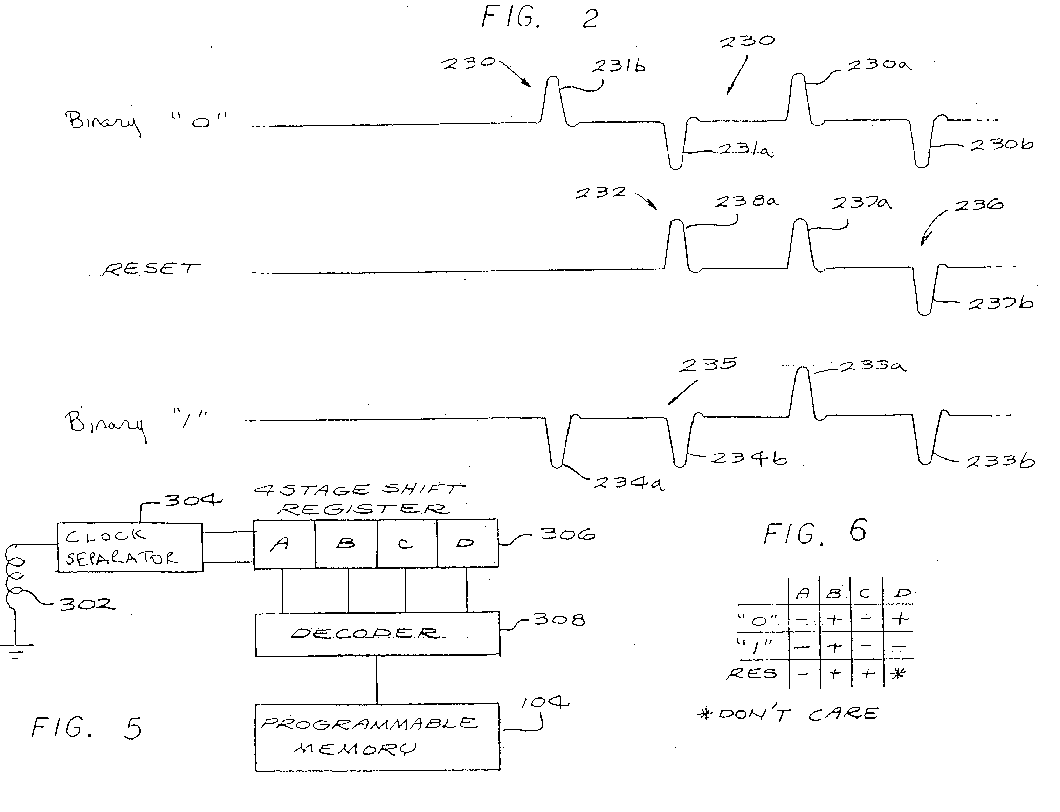

Figure 2 illustrates the sequence (or pattern) of signals produced in the reader for each different type of programmable information. In Figure 2, the pulses move from right to left at progressive instants of time so that the most recent pulse in a sequence is at the right. For example, to program a binary "0" in the programmable memory in the transponder, a sequence of signals generally indicated at 230 is produced. This sequence includes a first pair of pulses 231a and 231b alternately with positive and negative polarities. The sequence also includes a second pair of pulses 230a and 230b of positive and negative polarities. The second pair of pulses 230a and 230b indicates that programmable information is contained in the preceeding sequence. The preceeding pair of pulses 231a and 231b indicates a binary "0".

In like manner, a binary "1" is indicated in Figure 2 by a second pair of pulses 233a and 233b alternately of positive and negative polarities. This indicates that signals representing a programmable item is contained in the preceeding sequence. The programmable item constituting a binary "1" is indicated by a pair of pulses 234a and 234b, both of negative polarity. The pulses of positive and negative polarity preceeded by two pulses of negative polarity are generally indicated at 235 in Figure 2.

A sequence of pulses to initialize a code sequence identified as "Reset" is generally indicated at 236 in Figure 2. This sequence includes a pair of pulses 237a and 237b, first of positive polarity and then of negative polarity, to indicate that a programmable item is contained in the preceeding sequence. This pair of pulses follows a single pulse 238a of positive polarity. When a programmable item constituting a reset is produced, it may indicate that the following sequences individually represent binary "1's" and binary "0's" to be programmed into the memory.

The system shown in Figure 1 operates to produce the sequences of pulses indicated at 230, 235 and 236 in Figure 13. When the flip-flop 226 is in the false state of operation, a voltage of relatively low polarity is introduced to the gate of the transistor 200 to make the transistor conductive. A pulse of current accordingly flows through a circuit including the power supply 204, the transistor 200, the resistance 208, the capacitance 210 and the coil 212 to charge the capacitance. This current produces a voltage pulse, such as a pulse 240 in Figure 3, in the coil 212. The coil 212 is coupled to the transponder which incorporates a tuned circuit so as to produce ringing signals as indicated at 244 in Figure 3.

When the true state of the flip-flop 226 becomes operative, voltage of a relatively high polarity is produced on the output terminal of the left stage in the flip-flop. This causes the transistor 202 to become conductive. The capacitance 210 accordingly discharges through a circuit including the capacitance, the resistance 208, the transistor 202 and the coil 212. This flow of current produces a pulse of a negative polarity in the coil 212, as indicated at 242 in Figure 3. This pulse is followed by ringing signals as indicated at 246 in Figure 3.

The diode 218 operates to limit the amplitude of the positive pulses, such as the pulse 240, produced by the coil 212 and the diode 220 operates to limit the amplitude of the pulses of negative polarity, such as the pulse 242, produced by the coil. The pulses of limited amplitude are indicated at 247 in Figure 3. Because of this limitation in the amplitude of the pulses such as the pulses 240 and 242, the amplitudes of the ringing signals 244 and 246 more nearly approach those of the pulses 240 and 242.

The pulses, such as the pulses 247, of limited amplitude are introduced to the comparator 222 which operates to saturate the pulses such as the pulses 240 and 242 and the ringing signals such as the ringing signals 244 and 246. The resultant pulses from the comparator 222 are as indicated at 248 in Figure 3. As will be appreciated, all of the pulses now have substantially the same amplitude.

The saturated pulses from the comparator 222 and the voltage on the output terminal of the false stage in the flip-flop 226 are introduced to the exclusive "or" network 224. The network 224 is constructed in a conventional manner to pass a pulse only when one of the input voltages introduced to the network is low and the other input voltage introduced to the network is high. The pulses passing through the exclusive "or" network 224 are indicated at 250 in Figure 3.

The pulses passing through the network 224 are introduced to the counter 228. As will be seen from the subsequent discussion, the counter 228 is set at each instant to count to a value dependent upon the programming operation at that instant. When the particular count is reached in the counter 228, the counter becomes reset to start a new count. This causes a triggering signal to be introduced to the flip-flop 226 to set the flip-flop from its previous state of operation to the other state of operation. The triggering signals introduced to the flip-flop 226 are indicated at 252 in Figure 3.

In the representations shown in Figure 3, the first pulse in a sequence appears at the left and successive pulses appear progressively toward the right. In Figure 3, the pulses 240 and 242 constitute a pair for synchronizing the operation of the system shown in Figure 1 . These pulses are separated by a particular number such as ten (10) ringing cycles. A reset is then programmed by the production of pulses 260, 262, 264 and 266. The pulses 264 and 266 indicate that a programming item is contained in the preceeding pulses in time and the pulse 260 indicates that the programming item constitutes a reset. The pulses 260 and 262 provide such an indication since there is the particular separation of one (1) ringing cycles between these two (2) pulses. In this way, only the pulse 260 is considered at the transponder in providing the initialization reset and the pulse 262 is disregarded at the transponder.

In like manner, pulses such as the pulses 282 and 284 separated by the particular number such as ten (10) ringing cycles and having opposite polarities indicate that a programmable item is contained in the preceeding pulses. This programmable item is indicated by pulses 276, 278 and 280. The pulses 274 and 276 are separated by the particular number such as ten (10) clock signals. The pulse 278 is accordingly disregarded at the transponder in a manner similar to the way that the transponder disregards the pulse 262 in the previous paragraph.

In Figure 3, the pulses 264 and 266 also represent a binary "0". The reason is that the pulses 264 and 266 are followed by the pulses 274 and 276 respectively having a positive and negative polarity. Thus, as will be seen it is not necessary to send a separate pair of pulses for each programmable item, such as the pulses 264 and 266, respectively having positive and negative polarities. Specifically, the pulses 264 and 266 indicate that a reset is represented by the pulses 260. The pulses 264 and 266 also represent a binary "0" since they are followed by the pulses 274 and 276.

In considering Figure 3 in relation to Figure 5, it will be seen that the letter "A" through "F" are shown at strategic terminals in Figure 5. The voltages or signals produced at these terminals are shown in the rows "A" through "F" in Figure 6. Figure 3 also indicates the value for the letter "N" indicated in Figure 1 . This indicates a preselected number of ringing cycles to be produced at each instant.

Figure 4 is a schematic diagram of how the system shown in Figure 3 operates at the reader to obtain the generation by the circuitry shown in Figure 1 of the patterns of signals for programming the programmable memory at the transponder. The system shown in Figure 4 includes a microcomputer 300 which generates an individual code to be recorded in the memory at the transponder. This code controls at each instant the count to be provided in the counter 228 (also shown in Figure 1 ). As will be appreciated, every time that a count has been completed, a signal is introduced from the counter to the flip-flop 226 in Figure 1 to obtain the generation of a pulse which is transmitted by the coil 212 to the transponder.

Figure 16 schematically illustrates a system at the transponder for demodulating and detecting the programming pulses from the reader . The programming pulses from the reader are received by a coil 302 at the transponder. The coil 302 may be the same as the coil described in EP-A- 245 605. The pulses in the coil 302 are introduced to a clock separator 304 which determines whether a pulse is derived from a positive or negative signal in the coil 302. The positive pulses from the clock separator 304 are introduced on one line to a shift register 306 and the negative pulses are introduced on another line to the shift register. The pulses representing each programmable item are then shifted through the shift register 306 to obtain an identification of the programmable item (e.g. binary "1", binary "0" and reset) in accordance with the relative polarities of the pulses in the shift register 306. This identification is provided by a decoder 308 in accordance with a truth table in Figure 6. The programmable items (e.g. binary "1" or binary "0") may then be recorbed in the appropriate positions in the programmable memory . It will be appreciated that the clock separator 304, the shift register 306 and the decoder 308 may be included in a microprocessing unit at the transponder.

Figure 6 constitutes a table illustrating how signals are produced in the shift register 306 for the different programmable items constituting a binary "1", a binary "0" and a reset. In Figure 6, the successive stages in the shift register 306 are respectively illustrated at A, B, C and D to correspond to the designations for the shift registers in Figure 5. As will be seen, the signals are shifted progressively from the stage A to the stage B, then to the stage C and finally to the stage D. The decoder 308 examines the four (4) signals in parallel in the stages A, B, C and D in the shift register 306. A positive signal in the stage A and a negative signal in the stage B indicate that a programmable item is represented by the signals in the stages C and D. A positive signal in the stage C indicates a reset. When a reset is produced, this indicates that the following individual sequences represent binary "1's" or binary "0's" which may be recorded in the programmable memory in a pattern represented by such signals. Two negative signals in the stages C and D represent a binary "1". A positive signal in the stage C and a negative signal in the stage D represent a binary "0".

The apparatus disclosed above and shown in Figures 1 - 5 has certain important advantages. One advantage is that it is able to program the memory in the transponder by using the same types of pulse transmission as are used subsequently in identifying the transponder in accordance with the operation of the circuitry and apparatus shown in EP-A- 245 605.

Another advantage to the programming system and method of this invention is that the communication between the reader and the transponder is substantially foolproof during the programming of the transponder. This results in part from the characteristics of the coils as shown in EP-A- 245 605. It also results in part from the inclusion of the pair of pulses of opposite polarity following the pair of pulses identifying each programmable item. By including this pair of pulses, the transponder is able to identify that the preceeding pair of pulses represents a programmable item and is able to identify such programmable item from such preceeding pair of pulses.

There is another important advantage to the programming system and method of this invention. This results from the fact that the programming pulses are produced on a self synchronizing basis at the reader and that the pulses are produced after particular counts in the counter 228. This facilitates the identification and decoding of the programming pulses at the transponder 20.

The programming is also relatively fast. This results in part from the use of integrated circuit chips for the reader and the transponder. It also results in part from the generation of the programming pulses at the reader in accordance with the counts provided in the counter 228.

## Claims

1. Reader for use with a transponder having a programmable memory, said reader providing for the generation of information individually identifying the transponder to the reader, comprising:
means for transmitting patterns of information pulses (231, 231a, 238a, 234a, 234b) individually representing different items of said information,
**characterized in that**
the reader comprises means for transmitting a particular pattern of additional pulses (230a, 230b, 233a, 233b) at a particular time after each pattern of the information pulses individually representing the different items of information, said pattern of additional pulses indicating that the preceding pattern of information pulses constitutes one of said patterns individually representing different items of information.

2. Reader according to claim 1, wherein the means for producing the information and additional pulses generate a first individual sequence of signals representative of a binary "0", a second individual sequence of signals representative of a binary "1" and a third individual sequence of signals representative of a reset.

3. Reader according to claim 2, wherein said means for producing the information and additional pulses generate additional sequences of signals indicative of the position of generation of the first, second and third sequences of signals.

4. Reader according to claim 3, wherein the means for producing the information pulses generates a pair of pulses (231, 231a) of alternate polarity to represent a binary "0", a second pair of pulses (234a, 234b) of a first polarity to represent a binary "1" and at least one pulse (238a) of second polarity opposite to the first polarity to represent a reset and wherein the means for producing the additional pulses generates a pair of additional pulses (230a, 230b, 233a, 233b, 237a, 237b) at a particular time after the pulses indicating the binary "0", the binary "1" and the reset to identify the generation of the pulses indicating the binary "0", the binary "1" and the reset.

5. Reader according to at least one of claims 1 to 4, wherein the means for producing the pattern of information pulses and the additional pulses include a coil (212) and a capacitance (210) connected to the coil and means (200, 202, 226) for alternately providing for a storage of energy in the capacitance (210) to generate pulses in the coil of positive polarity and a discharge of such stored energy from the capacitance (210) to generate pulses in the coil of negative polarity.

6. Reader according to claim 5, wherein the means for producing the pattern of the information pulses and the additional pulses include bistable means (226) having first and second states of operation and a counter (228) for counting the signals in each sequence wherein the bistable means (226) are responsible to the beginning and end of each successive count of a sequence in the counter to become triggered to the opposite state of operation relative to its previous state of operation.

7. Reader according to claim 6, wherein the means for producing the pattern of the information pulses and the additional pulses further include means (200, 202) responsive to the operation of the bistable means (226) in the first state for providing for the storage of energy in the capacitance (210) through a circuit including the coil (212) to generate pulses of positive polarity in the coil and responsive to the operation of the bistable means (226) in the second state for providing for the discharge of the energy in the capacitance (210) through the coil to generate pulses of negative polarity in the coil.

8. Reader according to claim 6 or 7, further comprising means (300) for controlling the count to be provided at each instant in the counter (228), in accordance with the code to be provided for the transponder, of the signals generated at the reader in each sequence to control at each instant the number of signals generated at the reader to complete such sequence.

9. Reader according to claim 8, wherein the controlling means (300) provide for an individual count in the counter (228) at each instant, in accordance with the code to be programmed into the programmable memory in the transponder at that instant, of the signals generated in the sequence at the reader (12).

10. Transponder for use with a reader which is operative to transmit patterns of information pulses (231, 231a, 234a, 234b, 238a) individually representing different items of information, said transponder providing for the generation of information individually identifying the transponder to the reader, said transponder comprising:
means (302) for receiving the patterns of information pulses individually representing the different items of information transmitted by the reader,
demodulating means (304, 306) for operating upon the received pulses to recover the pulses individually representing different items of information,
a programmable memory, and
means for recording the different items of information in the programmable memory,
**characterized by**
means responding to a particular pattern of additional pulses, indicating that the preceding pattern of information pulses constitutes one of the patterns individually representing different items of information to determine the occurrence of the pattern of the information pulses individually representing the different items of information.

11. Transponder according to claim 10, wherein the information pulses have an individual sequence of pulses of first and second opposite polarities and the additional pulses have an individual sequence of pulses of the first and second opposite polarities and the demodulating means (304) are operative to detect the polarities of the successive pulses in the sequences to recover the decoded information.

12. Transponder according to claim 10 or 11, further comprising a coil (302) disposed in magnetically coupled relationship with a coil (212) at the reader.

13. Transponder according to at least one of claims 10 to 12 wherein the demodulating means include:
a separator (304) for separating the signals in each sequence from the signals in the adjacent sequences in accordance with the phases of the signals in such sequences,
a shift register (306) including a plurality of stages and responsive to the separated signals from the separator for passing such signals sequentially through the successive stages in the shift register, and
a decoder (308) for recovering programmable items in accordance with the pattern of the signals produced at successive instants of time in the stages in the shift register.

14. An identification system including a reader and a transponder comprising means for programming the transponder to generate coded information individually identifying the transponder to the reader, the reader being operative to transmit patterns of pulses (231, 231a, 234a, 234b,238a) individually representing different items of information,
means (302, 304) at the transponder for receiving the patterns of pulses individually representing the different items of information transmitted by the reader,
means (304, 306) at the transponder for operating upon the pulses received at the transponder to recover the pulses,
means (308) at the transponder responsive to the patterns of pulses recovered at the transponder for decoding such patterns of pulses to recover the items of information represented by such patterns of pulses,
a programmable memory at the transponder, and
means at the transponder for recording the recovered information in the programmable memory (204),
**characterized in that**
the reader comprises means for transmitting a particular pattern of additional pulses (230a, 230b, 233a, 233b) at a particular time after each pattern of the pulses individually representing the different items of information, said pattern of additional pulses indicating that the preceding pattern of pulses constitutes one of said pattern individually representing different items of information and in that
the transponder comprises means which respond to the particular pattern of additional pulses to determine the occurrence of the pattern of pulses individually representing the different items of information.

15. An identification system comprising a reader according to one of claims 1 to 9 and a transponder according to one of claims 10 to 13.

## Patentansprüche

1. Leseeinrichtung zur Verwendung mit einem Transponder, der einen programmierbaren Speicher aufweist, wobei die genannte Leseeinrichtung die Erzeugung von Informationen liefert, die individuell den Transponder für die Leseeinrichtung identifizieren, mit:
einer Einrichtung zur Übertragung von Mustern von Informationsimpulsen (231, 231a, 238a, 234a, 234b), die individuell unterschiedliche Gegenstände der genannten Informationen darstellen,
**dadurch gekennzeichnet,** daß
die Leseeinrichtung eine Einrichtung zur Übertragung eines bestimmten Musters zusätzlicher Impulse (230a, 230b, 233a, 233b) zu einer bestimmten Zeit nach jedem Muster der Informationsimpulse umfaßt, die individuell die unterschiedlichen Gegenstände an Informationen darstellen, wobei das genannte Muster zusätzlicher Impulse angibt, daß das vorhergehende Muster an Informationsimpulsen eines der genannten Muster bildet, die individuell unterschiedliche Gegenstände an Informationen darstellen.

2. Leseeinrichtung gemäß Anspruch 1, wobei die Einrichtungen zur Erzeugung der Informations- und zusätzlicher Impulse eine erste, individuelle Signalfolge, die eine binäre "0" darstellt, eine zweite, individuelle Signalfolge, die eine binäre "1" darstellt, und eine dritte, individuelle Signalfolge erzeugen, die ein Rücksetzen darstellt.

3. Leseeinrichtung gemäß Anspruch 2, wobei die genannten Einrichtungen zur Erzeugung der Informations- und zusätzlichen Impulse zusätzliche Signalfolgen erzeugen, die die Position der Erzeugung der ersten, der zweiten und der dritten Signalfolge angibt.

4. Leseeinrichtung gemäß Anspruch 3, wobei die Einrichtung zur Erzeugung der Infomnationsimpulse ein Impulspaar (231, 231a) abwechselnder Polarität erzeugt, um eine binäre "0" darzustellen, ein zweites Impulspaar (234a, 234b) einer ersten Polarität, um eine binäre "1" darzustellen, und wenigstens einen Impuls (238a) einer zweiten Polarität, die zu der ersten Polarität entgegengesetzt ist, um ein Rücksetzen darzustellen, und wobei die Einrichtung zur Erzeugung der zusätzlichen Impulse ein Paar zusätzlicher Impulse (230a, 230b, 233a, 233b, 237a, 237b) zu einer bestimmten Zeit nach den Impulsen erzeugt, die die binäre "0", die binäre "1" und das Rücksetzen angeben, um die Erzeugung der Impulse zu erkennen, die die binäre "0", die binäre "1" und das Rücksetzen angeben.

5. Leseeinrichtung gemäß wenigstens einem der Ansprüche 1 bis 4, wobei die Einrichtungen zur Erzeugung des Musters von Informationsimpulsen und der zusätzlichen Impulse eine Spule (212) und einen Kondensator (210), der mit der Spule verbunden ist, und eine Einrichtung (200, 202, 226) einschließen, um abwechselnd eine Speicherung von Energie in dem Kondensator (210), um in der Spule Impulse positiver Polarität zu erzeugen, und eine Entladung solcher gespeicherten Energie von dem Kondensator (210) bereitzustellen, um in der Spule Impulse negativer Polarität zu erzeugen.

6. Leseeinrichtung gemäß Anspruch 5, wobei die Einrichtungen zur Erzeugung des Musters der Informationsimpulse und der zusätzlichen Impulse eine bistabile Einrichtung (226) einschließen, die einen ersten und zweiten Betriebszustand aufweist, und einen Zähler (228) zur Zählung der Signale in jeder Folge, wobei die bistabilen Einrichtungen (226) auf den Anfang und das Ende von jedem aufeinanderfolgenden Zählwert einer Folge in dem Zähler ansprechen, damit sie für den entgegengesetzten Betriebszustand in bezug auf ihren vorhergehenden Betriebszustand angesteuert werden.

7. Leseeinrichtung gemäß Anspruch 6, wobei die Einrichtungen zur Erzeugung des Musters der Informationsimpulse und der zusätzlichen Impulse des weiteren Einrichtungen (200, 202) einschließen, die auf die Arbeitsweise der bistabilen Einrichtung (226) in dem ersten Zustand reagieren, um die Energiespeicherung in dem Kondensator (210) durch eine Schaltung bereitzustellen, die die Spule (212) enthält, um Impulse positiver Polarität in der Spule zu erzeugen, und auf die Arbeitsweise der bistabilen Einrichtungen (226) in dem zweiten Zustand anspricht, um die Energieentladung bei dem Kondensator (210) durch die Spule hindurch bereitzustellen, um Impulse negativer Polarität in der Spule zu erzeugen.

8. Leseeinrichtung gemäß Anspruch 6 oder 7, die des weiteren eine Einnchtung (300) zur Steuerung des Zählwerts umfaßt, der zu jedem Zeitpunkt in dem Zähler (228) bereitgestellt werden soll, nach Maßgabe des Codes von Signalen, der dem Transponder geliefert werden soll, die in der Leseeinrichtung bei jeder Folge erzeugt werden, um zu jedem Zeitpunkt die Anzahl der Signale zu steuern, die bei der Leseeinrichtung erzeugt werden, um eine solche Folge zu vervollständigen.

9. Leseeinrichtung gemäß Anspruch 8, wobei die Steuerungseinrichtungen (300) einen individuellen Zählwert in dem Zähler (228) zu jedem Zeitpunkt nach Maßgabe des Codes von Signalen, der in dem programmierbaren Speicher in dem Transponder zu diesem Zeitpunkt programmiert werden soll, liefem, die in der Folge bei der Leseeinrichtung (12) erzeugt werden.

10. Transponder zur Verwendung mit einer Leseeinrichtung, die betreibbar ist, um Muster von Informationsimpulsen (231, 231a, 234a, 234b, 238a) zu übertragen, die einzeln unterschiedliche Informationsgegenstände darstellen, wobei der genannte Transponder die Erzeugung von Informationen liefert, die einzeln den Transponder für die Leseeinrichtung identifizieren, wobei der genannte Transponder umfaßt:
eine Einrichtung (302) zum Erhalten der Muster von Informationsimpulsen, die einzeln die unterschiedlichen Informationsgegenstände darstellen, die von der Leseeinrichtung übertragen werden,
eine Demodulationseinrichtung (304, 306), die mit den erhaltenen Impulse arbeitet, um die Impulse wieder herzustellen, die einzeln verschiedene Informationsgegenstände darstellen,
einen programmierbaren Speicher, und
eine Einrichtung zur Aufzeichnung der unterschiedlichen Informationsgegenstände in dem programmierbaren Speicher, **gekennzeichnet durch**
eine Einrichtung, die auf ein bestimmtes Muster zusätzlicher Impulse reagiert, die angegeben, daß das vorhergehende Muster von Informationsimpulsen eines der Muster bildet, die einzeln unterschiedliche Informationsgegenstände darstellt, um das Auftreten des Musters von Informationsimpulsen zu bestimmen, die einzeln die unterschiedlichen Informationsgegenstände darstellen.

11. Transponder gemäß Anspruch 10, wobei die Informationsimpulse individuelle Impulsfolgen erster und zweiter, entgegengesetzter Polarität aufweisen und die zusätzlichen Impulse eine individuelle Impulsfolge der ersten und zweiten, entgegengesetzten Polarität aufweisen, und die Demodulationseinrichtungen (304) betreibbar sind, um die Polaritäten aufeinanderfolgender Impulse in den Folgen zu bestimmen, um die decodierte Information wiederzugewinnen.

12. Transponder gemäß Anspruch 10 oder 11, der des weiteren eine Spule (302) umfaßt, die in einer magnetisch gekoppelten Beziehung zu einer Spule (212) bei der Leseeinrichtung angeordnet ist.

13. Transponder gemäß wenigstens einem der Ansprüche 10 bis 12, wobei die Demodulationseinrichtungen einschließen:
eine Trenneinrichtung (304) zur Trennung der Signale in jeder Folge von den Signalen in den benachbarten Folgen nach Maßgabe der Phasen der Signale in solchen Folgen,
ein Schieberegister (306), das eine Mehrzahl Stufen enthält und auf die getrennten Signale von der Trenneinrichtung reagiert, um solche Signale der Reihe nach durch die aufeinanderfolgenden Stufen in dem Schieberegister hindurch zu bewegen, und
einen Decodierer (308) zur Wiedergewinnung programmierbarer Gegenstände gemäß dem Muster von Signalen, das zu aufeinanderfolgenden Zeitpunkten in den Stufen des Schieberegisters erzeugt werden.

14. Ein Erkennungssystem, das eine Leseeinrichtung und einen Transponder einschließt, das eine Einnchtung zur Programmierung des Transponders umfaßt, um codierte Informationen zu erzeugen, die individuell den Transponder für die Leseeinrichtung identifizieren, wobei die Leseeinrichtung arbeitet, Impulsmuster (231, 231a, 234a, 234b, 238a) zu übertragen, die einzelnen unterschiedliche Informationsgegenstände darstellen,
eine Einrichtung (302, 304) bei dem Transponder, um Impulsmuster zu empfangen, die individuell die verschiedenen Informationsgegenstände darstellen, die von der Leseeinrichtung übertragen werden,
eine Einrichtung (304, 306) bei dem Transponder, um mit den Impulsen zu arbeiten, die bei dem Transponder empfangen werden, um die Impulse wiederzugewinnen,
eine Einrichtung (308) bei dem Transponder, die auf die Impulsmuster regiert, die bei dem Transponder wiedergewonnen werden, um solche Impulsmuster zu decodieren, damit die Informationsgegenstände wiedergewonnen werden, die von solchen Impulsmustern dargestellt werden,
einen programmierbaren Speicher bei dem Transponder, und
eine Einrichtung bei dem Transponder, um die wiedergewonnenen Informationen in dem programmierbaren Speicher (204) aufzuzeichnen
**dadurch gekennzeichnet,** daß
die Leseeinrichtung eine Einrichtung zur Übertragung eines bestimmten Musters von zusätzlichen Impulsen (230a, 230b, 233a, 233b) zu einer bestimmten Zeit nach jedem Muster der Informationsimpulse umfaßt, die individuell die unterschiedlichen Gegenstände an Informationen darstellen, wobei das genannte Muster zusätzlicher Impulse angibt, daß das vorhergehende Muster von Informationsimpulsen eines der genannten Muster bildet, die individuell unterschiedliche Gegenstände an Informationen darstellen, und daß
der Transponder Einrichtungen umfaßt, die auf das besondere Muster zusätzlicher Impulse reagieren, um das Auftreten von Impulsmustern zu bestimmen, die einzeln die unterschiedlichen Informationsgegenstände darstellen.

15. Ein Identifikationssystem, das eine Leseeinrichtung gemäß einem der Ansprüche 1 bis 9 und einen Transponder gemäß einem der Ansprüche 10 bis 13 umfaßt.

## Revendications

1. Lecteur pour une utilisation avec un répéteur comportant une mémoire programmable, ledit lecteur assurant la génération d'une information identifiant individuellement le répéteur pour le lecteur, comprenant :
des moyens pour émettre des motifs d'impulsions d'information (231, 231a, 238a, 234a, 234b) représentant individuellement différents éléments de ladite information,
caractérisé en ce que :
le lecteur comprend des moyens pour émettre un motif particulier d'impulsions supplémentaires (230a, 230b, 233a, 233b) à un instant particulier après chaque motif des impulsions d'information représentant individuellement les différents éléments d'information, ledit motif d'impulsions supplémentaires indiquant que le motif précédent d'impulsions d'information constitue l'un desdits motifs représentant individuellement différents éléments d'information.

2. Lecteur selon la revendication 1, dans lequel les moyens pour produire les impulsions d'information et les impulsions supplémentaires génèrent une première séquence individuelle de signaux représentative d'une valeur binaire "0", une seconde séquence individuelle de signaux représentative d'une valeur binaire "1" et une troisième séquence individuelle de signaux représentative d'une remise à l'état initial.

3. Lecteur selon la revendication 2, dans lequel lesdits moyens pour produire les impulsions d'information et les impulsions supplémentaires génèrent des séquences supplémentaires de signaux indicatives de la position de génération des première, seconde et troisième séquences de signaux.

4. Lecteur selon la revendication 3, dans lequel les moyens pour produire les impulsions d'information génèrent deux premières impulsions (231, 231a) de polarités alternées pour représenter une valeur binaire "0", deux secondes impulsions (234a, 234b) d'une première polarité pour représenter une valeur binaire "1" et au moins une impulsion (238a) d'une seconde polarité opposée à la première polarité pour représenter une remise à l'état initial et dans lequel les moyens pour produire les impulsions supplémentaires génèrent deux impulsions supplémentaires (230a, 230b, 233a, 233b, 237a, 237b) à un instant particulier après les impulsions indiquant la valeur binaire "0", la valeur binaire "1" et la remise à l'état initial afin d'identifier la génération des impulsions indiquant la valeur binaire "0", la valeur binaire "1" et la remise à l'état initial.

5. Lecteur selon au moins l'une des revendications 1 à 4, dans lequel les moyens pour produire le motif d'impulsions d'information et les impulsions supplémentaires incluent une bobine (212) et une capacité (210) connectée à la bobine et des moyens (200, 202, 226) pour assurer en alternance un stockage d'énergie dans la capacité (210) afin de générer des impulsions dans la bobine de polarité positive et une décharge de cette énergie stockée depuis la capacité (210) afin de générer des impulsions dans la bobine de polarité négative.

6. Lecteur selon la revendication 5, dans lequel les moyens pour produire le motif des impulsions d'information et les impulsions supplémentaires incluent des moyens bistables (226) présentant des premier et second états de fonctionnement et un compteur (228) pour compter les signaux dans chaque séquence, dans lequel les moyens bistables (226) sont sensibles au début et à la fin de chaque comptage successif d'une séquence dans le compteur pour se déclencher selon l'état opposé de fonctionnement par rapport à leur état précédent de fonctionnement.

7. Lecteur selon la revendication 6, dans lequel les moyens pour produire le motif des impulsions d'information et les impulsions supplémentaires incluent en outre des moyens (200, 202) sensibles au fonctionnement des moyens bistables (226) dans le premier état pour assurer le stockage d'énergie dans la capacité (210) par l'intermédiaire d'un circuit incluant la bobine (212) pour générer des impulsions de polarité positive dans la bobine et sensibles au fonctionnement des moyens bistables (226) dans le second état pour assurer la décharge de l'énergie dans la capacité (210) au travers de la bobine pour générer des impulsions de polarité négative dans la bobine.

8. Lecteur selon la revendication 6 ou 7, comprenant en outre des moyens (300) pour commander le comptage, destiné à être appliqué à chaque instant dans le compteur (228) conformément au code qui doit être prévu pour le répéteur, des signaux générés au niveau du lecteur dans chaque séquence pour commander à chaque instant le nombre de signaux générés au niveau du lecteur pour terminer cette séquence.

9. Lecteur selon la revendication 8, dans lequel les moyens de commande (300) assurent un comptage individuel, dans le compteur (228) à chaque instant conformément au code à programmer dans la mémoire programmable dans le répéteur à cet instant, des signaux générés dans la séquence au niveau du lecteur (12).

10. Répéteur pour une utilisation avec un lecteur qui fonctionne pour émettre des motifs d'impulsions d'information (231, 231a, 234a, 234b, 238a) représentant individuellement différents éléments d'information, ledit répéteur assurant la génération d'une information identifiant individuellement le répéteur pour le lecteur, ledit répéteur comprenant :
des moyens (302) pour recevoir les motifs d'impulsions d'information représentant individuellement les différents éléments d'information émis par le lecteur ;
des moyens de démodulation (304, 306) pour opérer sur les impulsions reçues afin de restaurer les impulsions représentant individuellement différents éléments d'information ;
une mémoire programmable ; et
des moyens pour enregistrer les différents éléments d'information dans la mémoire programmable,
caractérisé par :
des moyens qui répondent à un motif particulier d'impulsions supplémentaires indiquant que le motif précédent d'impulsions d'information constitue l'un des motifs représentant individuellement différents éléments d'information pour déterminer la survenue du motif des impulsions d'information représentant individuellement les différents éléments d'information.

11. Répéteur selon la revendication 10, dans lequel les impulsions d'information comportent une séquence individuelle d'impulsions de première et seconde polarités opposées et les impulsions supplémentaires comportent une séquence individuelle d'impulsions des première et seconde polarités opposées et les moyens de démodulation (304) fonctionnent pour détecter les polarités des impulsions successives dans les séquences afin de restaurer l'information décodée.

12. Répéteur selon la revendication 10 ou 11, comprenant en outre une bobine (302) disposée selon une relation de couplage magnétique avec une bobine (212) au niveau du lecteur.

13. Répéteur selon au moins l'une des revendications 10 à 12, dans lequel les moyens de démodulation incluent :
un séparateur (304) pour séparer les signaux dans chaque séquence vis-à-vis des signaux dans les séquences adjacentes conformément aux phases des signaux dans ces séquences ;
un registre à décalage (306) incluant une pluralité d'étages et sensible aux signaux séparés provenant du séparateur pour passer séquentiellement ces signaux au travers des étages successifs dans le registre à décalage ; et
un décodeur (308) pour restaurer des éléments programmables conformément au motif des signaux produits à des instants temporels successifs dans les étages dans le registre à décalage.

14. Système d'identification incluant un lecteur et un répéteur comprenant des moyens pour programmer le répéteur afin de générer une information codée identifiant individuellement le répéteur pour le lecteur, le lecteur fonctionnant pour émettre des motifs d'impulsions (231, 231a, 234a, 234b, 238a) représentant individuellement différents éléments d'information ;
des moyens (302, 304) au niveau du répéteur pour recevoir les motifs d'impulsions représentant individuellement les différents éléments d'information émis par le lecteur ;
des moyens (304, 306) au niveau du répéteur pour opérer sur les impulsions reçues au niveau du répéteur pour restaurer les impulsions ;
des moyens (308) au niveau du répéteur sensibles aux motifs d'impulsions restaurées au niveau du répéteur pour décoder ces motifs d'impulsions afin de restaurer les éléments d'information représentés par ces motifs d'impulsions ;
une mémoire programmable au niveau du répéteur ; et
des moyens au niveau du répéteur pour enregistrer l'information restaurée dans la mémoire programmable (204),
caractérisé en ce que :
le lecteur comprend des moyens pour émettre un motif particulier d'impulsions supplémentaires (230a, 230b, 233a, 233b) un instant particulier après chaque motif des impulsions représentant individuellement les différents éléments d'information, ledit motif d'impulsions supplémentaires indiquant que le motif précédent d'impulsions constitue l'un desdits motifs représentant individuellement différents éléments d'information,
et en ce que :
le répéteur comprend des moyens qui répondent au motif particulier d'impulsions supplémentaires pour déterminer la survenue du motif d'impulsions représentant individuellement les différents éléments d'information.

15. Système d'identification comprenant un lecteur selon l'une des revendications 1 à 9 et un répéteur selon l'une des revendications 10 à 13.
